# EUROPÄISCHE PATENTSCHRIFT

(11) **EP 2 661 375 B1**
(45) Veröffentlichungstag und Bekanntmachung des Hinweises auf die Patenterteilung: **12.08.2015**
(21) Anmeldenummer: 12713109.2
(22) Anmeldetag: 30.03.2012
(51) Int. Cl.: B60B 35/08, B60C 23/00

(54) **RADLAGERANORDNUNG, INSBESONDERE RADLAGERANORDNUNG FÜR NUTZFAHRZEUGE**
WHEEL BEARING ARRANGEMENT FOR TRUCKS
ENSEMBLE ROULEMENT DE ROUE POUR UN VÉHICULE UTILITAIRE

(30) Priorität: 12.04.2011 DE 102011007231
(43) Veröffentlichungstag der Anmeldung: 13.11.2013
(73) Patentinhaber: SAF-HOLLAND GmbH, 63856 Bessenbach (DE)
(72) Erfinder: WEBER, Elmar, 48249 Dülmen (DE); DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2012/055754
(87) Internationale Veröffentlichungsnummer: WO 2012/139900

(56) Entgegenhaltungen:
- EP-A1- 1 099 574
- EP-A1- 1 714 803
- EP-A2- 1 736 327
- WO-A1-96/24498
- WO-A1-98/08698
- DE-A1- 3 806 322
- US-A- 1 772 212
- US-A- 4 883 106
- US-A- 5 429 167
- US-A- 6 131 631
- US-A1- 2004 155 516
- US-A1- 2004 238 093
- US-A1- 2005 194 079
- US-A1- 2009 241 655
- US-B1- 6 394 159
- US-B1- 6 435 238

## Beschreibung

Die vorliegende Erfindung betrifft eine Radlageranordnung, insbesondere eine Radlageranordnung für Nutzfahrzeuge.

Radlageranordnungen für Nutzfahrzeuge sind aus dem Stand der Technik hinreichend bekannt. Ebenfalls bekannt sind Systeme, die es erlauben, den Reifenluftdruck von Nutzfahrzeugen während des Betriebes zu regeln. Dabei ist es jedoch problematisch, die aufwendigen und empfindlichen Systeme zur Reifenluftdruckregelung in vorhandene Radlageranordnungen an Nutzfahrzeugen zu integrieren, da beispielsweise zusätzliche Leitungen im Unterbodenbereich des Nutzfahrzeuges verlegt werden müssen. Diese Leitungen sind einer erhöhten Gefahr der Beschädigung durch Körper, die während der Fahrt den Unterboden des Nutzfahrzeuges treffen, ausgesetzt.

Die WO-A-96/24498 offenbart eine Radlageranordnung für Nutzfahrzeuge, umfassend eine Hohlkörpereinheit, eine Fixiereinheit und eine Statoreinheit, wobei die Hohlkörpereinheit eine maximale Erstreckung längs einer Axialrichtung, einen sich im Wesentlichen längs der Axialrichtung erstreckenden Druckraum und einen Endabschnitt aufweist, wobei die Fixiereinheit am Endabschnitt festgelegt ist, wobei an der Fixiereinheit die Statoreinheit festgelegt ist, und wobei die Statoreinheit Befestigungs- und Abdichtungsmittel aufweist, mittels derer eine Rotoreinheit luftdicht und drehbar relativ zur Statoreinheit an die Radlageranordnung anlagerbar ist, wobei die Fixiereinheit einstückig ausgeführt ist und wobei die Hohlkörpereinheit benachbart zum Endabschnitt einen Lagerbereich aufweist, und wobei im Lagerbereich eine Lageranordnung an der Hohlkörpereinheit gelagert und von einer separaten Rad-Mutter gegen Verlagerung relativ zur Hohlkörpereinheit verspannt bzw. verspannbar ist.

Das Dokument DE-A-3806322 offenbart eine weitere Radlageranordnung, bei der das Ende der Druckleitung als Axialbohrung in einen Achsstummel eingearbeitet ist, auf dem die Radnabe über zwei Wälzlager gelagert ist. Auf das freie Ende des Achsstummels ist eine im Querschnitt U-förmige einteilige Kupplungsplatte aus Kunststoff aufgeschraubt. In die Kupplungsplatte ist eine zentrische Bohrung eingearbeitet, die die Druckleitung mit der Bohrung eines Luftkammergehäuses verbindet. Auch bei dieser Lösung wird das Wälzlager von einer separaten Rad-Mutter gegen Verlagerung relative zur Hohlkörper verspannt.

Die Dokumente US-A-2005/194079; EP-A-1 099 574; US-A-6 394 159 offenbaren jeweils eine Radlageranordnung für Nutzfahrzeuge, umfassend eine Hohlkörpereinheit in Form von einer Achse, wobei die Achse einen sich im Wesentlichen längs der Axialrichtung erstreckenden Druckraum und einen Endabschnitt aufweist, wobei ein Verschluss am Endabschnitt der Achse festgelegt ist, wobei an dem Verschluss eine Statoreinheit eines Reifenbefüllsystems festgelegt ist, die Abdichtungsmittel aufweist, mittels derer eine Rotoreinheit des Reifenbefüllsystems luftdicht und drehbar relativ zur Statoreinheit an die Radlageranordnung anlagerbar ist, wobei die Achse benachbart zum Endabschnitt einen Lagerbereich aufweist, und wobei im Lagerbereich eine Lageranordnung an der Achse gelagert und von einer separaten Rad-Mutter gegen Verlagerung relativ zur Hohlkörpereinheit verspannt ist.

Die Dokumente US-A-2005/194079, US 2009/241655, EP-A-1 714 803, WO-A-98/08698 zeigen jeweils anderen ähnlichen Radlageranordnungen für Nutzfahrzeuge, welche auch ein Reifenbefüllsystem umfassen.

Es ist also Aufgabe der vorliegenden Erfindung, eine Radlageranordnung bereitzustellen, die es ermöglicht, ein Druckluftregelungssystem am Nutzfahrzeug auf einfache Weise zu integrieren und dabei die hohen Sicherheitsstandards für Nutzfahrzeuge zu erreichen.

Diese Aufgabe wird gelöst mit einer Radlageranordnung mit den Merkmalen des Anspruchs 1. Bevorzugte Ausführungsformen ergeben sich aus den abhängigen Ansprüchen.

Erfindungsgemäß umfasst die Radlageranordnung, eine Hohlkörpereinheit, eine Fixiereinheit und eine Statoreinheit, wobei die Hohlkörpereinheit eine maximale Erstreckung längs einer Axialrichtung, einen sich im Wesentlichen längs der Axialrichtung erstreckenden Druckraum und einen Endabschnitt aufweist, wobei die Fixiereinheit am Endabschnitt festgelegt ist, wobei an der Fixiereinheit die Statoreinheit festgelegt ist, wobei die Statoreinheit Befestigungs- und Abdichtungsmittel aufweist, mittels derer eine Rotoreinheit luftdicht und drehbar relativ zur Statoreinheit an die Radlageranordnung anlagerbar ist, wobei die Hohlkörpereinheit benachbart zum Endabschnitt einen Lagerbereich aufweist, wobei im Lagerbereich eine Lageranordnung an der Hohlkörpereinheit gelagert und von der Fixiereinheit gegen Verlagerung relativ zur Hohlkörpereinheit verspannt, bzw. verspannbar ist, und wobei die Fixiereinheit einstückig ausgeführt ist.

Bevorzugt ist die Hohlkörpereinheit beispielsweise eine vorzugsweise starre oder lenkbare Achse eines Nutzfahrzeuges, die ihre maximale Erstreckung längs einer Axialrichtung A erreicht. Vorteilhaft ist die Hohlkörpereinheit als Hohlkörper, bzw. rohrförmiger Körper, mit entlang der Axialrichtung veränderlichen Innen- bzw. Außendurchmessern ausgebildet. An einem ersten Ende in Axialrichtung weist die Hohlkörpereinheit einen Endabschnitt auf. In diesem Endabschnitt wird eine Fixiereinheit an der Hohlkörpereinheit festgelegt, wobei an der Hohlkörpereinheit und an der Fixiereinheit entsprechende Mittel zum Festlegen der beiden Einheiten aneinander vorgesehen sind. Weiterhin weist die Hohlkörpereinheit einen Druckraum auf, welcher bevorzugt dazu dient, ein Fluid, besonders bevorzugt Luft, innerhalb der Hohlkörpereinheit zu leiten. Es ist von Vorteil, wenn der Druckraum durch entsprechende Dichtungsmittel so abgedichtet ist, dass er Drücke von bis zu 15 bar, mindestens aber 6 bar halten kann. Die Statoreinheit ist an der Fixiereinheit festgelegt und weist Befestigungs- und Abdichtungsmittel zur Befestigung bzw. Abdichtung einer an die Statoreinheit angelagerten Rotoreinheit auf. Die Statoreinheit ist dadurch gekennzeichnet, dass sie mit einem ersten Ende an den Druckraum grenzt und mit einem zweiten Ende, dem ersten Ende gegenüberliegend, an eine Rotoreinheit anlagerbar ist. Die Statoreinheit ist relativ zur Fixiereinheit und zur Hohlkörpereinheit festgelegt, d.h. sie kann sich relativ zur Hohlkörpereinheit bzw. Fixiereinheit nicht verdrehen oder verlagern. Die an die Statoreinheit anzulagernde Rotoreinheit dagegen ist relativ zur Hohlkörpereinheit, Fixiereinheit und Statoreinheit drehbar gelagert. Bevorzugt ist die Rotoreinheit festgelegt an weiteren rotierenden Baueinheiten der Radlageranordnung. Zur luftdichten Verbindung von Rotoreinheit und Statoreinheit weist die Statoreinheit Abdichtungsmittel auf, welche bevorzugt auch dann ausreichend abdichten, wenn sich die zwei gegeneinander abzudichtenden Teile relativ zueinander bewegen. Von Vorteil kann die Verwendung von Labyrinthdichtungen, Profildichtringen oder Lamellendichtungen sein. Bevorzugt weist die Statoreinheit eine sich entlang der Axialrichtung erstreckende Aussparung bzw. eine Durchgangsbohrung auf, durch die Druckluft aus dem Druckraum in die Statoreinheit und von dieser weiter in die Rotoreinheit gelangen kann. Auf diese Weise kann Druckluft aus der feststehenden Hohlkörpereinheit bzw. aus dem feststehenden Druckraum über die Statoreinheit in die Rotoreinheit und damit in den rotierenden Teil der Radlageranordnung gelangen. Insbesondere kann auf diese Weise durch Anlegen eines Luftdruckes an den Druckraum bzw. durch Zuführen von Druckluft in den Druckraum, der Reifenluftdruck in den Reifen eines Nutzfahrzeuges überwacht und gesteuert werden. Es ist dabei bevorzugt, dass der Druck vom Fahrzeugreifen über die Rotoreinheit, die Statoreinheit und den Druckraum ungehindert bis zu einer an den Druckraum angelagerten Überwachungseinheit, bzw. Pumpeinheit, gelangen kann. Mithilfe der Überwachungseinheit kann bevorzugt der Reifendruck im Reifen zu jeder Zeit direkt ermittelt werden, da der Druck im Reifen bei ungehinderter Strömung der durchströmten Bauteile gleich dem Druck vor der Überwachungseinheit ist. Weiterhin können in der Überwachungseinheit bestimmte Zielwerte für den Reifendruck hinterlegt sein, welche mit dem aktuell vorliegenden Reifenluftdruck verglichen werden und entsprechende Maßnahmen eingeleitet werden. Vorteilhaft besitzt die Überwachungseinheit eine Schnittstelle mit der Pumpeinheit, wobei die Pumpeinheit auf Befehl der Überwachungseinheit den Luftdruck im System erhöht oder verringert.

Erfindungsgemäß weist die Hohlkörpereinheit benachbart zum Endabschnitt einen Lagerbereich auf, wobei im bzw. am Lagerbereich eine Lageranordnung an der Hohlkörpereinheit gelagert und von der Fixiereinheit gegen Verlagerung relativ zur Hohlkörpereinheit verspannbar ist. Bevorzugt erfüllt die Hohlkörpereinheit also eine zweite Aufgabe, nämlich eine Lageranordnung aufzunehmen und diese zu verspannen. In bevorzugter Weise dient die Lageranordnung dazu, einen Rotor bzw. eine rotierende Baueinheit gegen Verlagerung relativ zur Hohlkörpereinheit zu sichern und relativ zur Hohlkörpereinheit drehbar zu lagern. Die rotierende, um die Hohlkörpereinheit drehbar zu lagernde Komponente kann beispielsweise eine Radnabe mit einer Bremsschreibe oder Bremstrommel sein. Zur Aufnahme der Lageranordnung weist die Hohlkörpereinheit einen Lagerbereich auf, welcher sich bevorzugt an der Außenseite, also an einem Ende der Hohlkörpereinheit angrenzend an den Endabschnitt, befindet. Der Lagerbereich weist darüber hinaus bevorzugt einen nach innen in Axialrichtung zur Mitte der Hohlkörpereinheit hin weisenden Vorsprung auf, an welchen die Lageranordnung bevorzugt angelagert werden kann. Die Lageranordnung ist auf diese Weise gegen Verschiebung bzw. Verlagerung entlang der Axialrichtung zur Mitte der Hohlkörpereinheit hin gesichert. Am äußeren Ende der Hohlkörpereinheit im Endabschnitt greift das Fixierelement bevorzugt in dafür vorgesehene Gewinde oder ähnliche Befestigungsmittel ein, bringt eine Kraft in Axialrichtung hin zur Mitte der Hohlkörpereinheit auf und sichert auf diese Weise die Lageranordnung gegen Verlagerung nach außen entlang der Axialrichtung. Die Lageranordnung ist dabei bevorzugt ein Wälzlager, beispielsweise ein Kegelrollenlager, Kugellager oder Zylinderrollenlager, welches bevorzugt Kräfte in Axialrichtung und quer dazu in Radialrichtung übertragen kann und auf diese Weise die rotierende Komponente der Radlageranordnung sowohl in Radialrichtung als auch in Axialrichtung fixiert. Die Fixiereinheit ist bevorzugt an den feststehenden bzw. relativ zur Hohlkörpereinheit nicht drehbar gelagerten Innenring eines Wälzlagers angelegt und übt eine Kraft auf diesen aus. Diese von der Fixiereinheit zu erfüllende Funktion ist bevorzugt vergleichbar mit der Funktion einer Radmutter, bzw. Achsmutter oder Achsschraube, die unmittelbar oder mittels einer oder einer Vielzahl von Distanzstücken, ein oder eine Vielzahl von Lagern gegen Verschiebung in Axialrichtung sichert. Um die benötigte Verspannkraft auf die Lageranordnung aufbringen zu können, ist die Fixiereinheit bevorzugt über ein Gewinde mit dem Endabschnitt der Hohlkörpereinheit verbunden. Dieses Gewinde kann bevorzugt ein Außengewinde an der Hohlkörpereinheit in Kombination mit einem Innengewinde an der Fixiereinheit sein. In weiteren bevorzugten Ausführungen kann auch ein Innengewinde an der Hohlkörpereinheit in Kombination mit einem Außengewinde an der Fixiereinheit vorgesehen sein. Bevorzugt ist als Gewindeart ein selbstdichtendes Gewinde, wie zum Beispiel ein dichtendes, metrisches ISO-Gewinde vorgesehen, da auf diese Weise die Kontaktfläche zwischen Hohlkörpereinheit und Fixiereinheit bis zu einem gewissen Grade luftdicht ausgelegt werden kann. Weiterhin ist bevorzugt, dass das Gewinde, mit welchem die Fixiereinheit an der Hohlkörpereinheit festgelegt ist, selbstverspannend ist, bzw. einen Festsitz aufweist.

In einer besonders bevorzugten Ausführungsform ist der Druckraum eine Aussparung in der Hohlkörpereinheit, wobei der Druckraum an einem ersten Ende von einem Zufuhrstutzen und an einem zweiten Ende von einer Fixiereinheit und der Statoreinheit begrenzt wird. Bevorzugt ist also die erfindungsgemäße Aussparung in der Hohlkörpereinheit gleich dem Druckraum. Diese Ausführungsform ist bevorzugt dadurch gekennzeichnet, dass keine weiteren konstruktiven Änderungen oder Anbauteile, außer einer Öffnung in der Hohlkörpereinheit, welche mit einem Zufuhrstutzen versehen ist, und einer zweiten Öffnung an der Hohlkörpereinheit, an welche die Fixiereinheit und die Statoreinheit angelagert sind, vorgesehen werden müssen. Es ist bevorzugt, die Hohlkörpereinheit, beispielsweise die starre Achse einer Radaufhängung für Nutzfahrzeuge, als rohrförmiges Bauteil auszuführen und es ist auf diese Weise besonders einfach, den ohnehin vorhandenen Raum innerhalb der Hohlkörpereinheit als Druckraum, bzw. Druckluftleitung, für Druckluft zu verwenden. Bevorzugt wird auf diese Weise ein Anbringen externer Leitungen im Bereich des Fahrzeugunterbodens vermieden und die Sicherheit des Systems zur Überwachung und Steuerung des Reifenluftdruckes signifikant erhöht. Es sind dabei bevorzugt Dichtungselemente vorgesehen, welche sowohl an der Druckluftzufuhr, also im Bereich des Zufuhrstutzens, und auch an der Druckluftentnahme, also im Bereich von Fixiereinheit bzw. Statoreinheit angeordnet sind. Diese Dichtungselemente sind bevorzugt statische Dichtungen, d.h. Dichtungen zwischen zwei sich nicht relativ zueinander bewegenden Teilen. Es kann bevorzugt auf herkömmliche Dichtungselemente wie O-Ringe oder Profildichtringe zurückgegriffen werden. In vorteilhafter Weise ist im Bereich des Zufuhrstutzens eine Aussparung in die Hohlkörpereinheit eingebracht und mit einem Gewinde versehen, wobei der Zufuhrstutzen, an dem ein Außengewinde vorgesehen ist, in die Aussparung eingeschraubt werden kann. An den Zufuhrstutzen kann in bevorzugter Weise eine Druckluftleitung angesetzt werden, über welche die Druckluft in die Hohlkörpereinheit gelangt. Die den Druckraum innerhalb der Hohlkörpereinheit begrenzenden Innenwände der Hohlkörpereinheit sind so auszulegen, dass auch Feuchtigkeit enthaltende Luft in Kontakt mit den Innenwänden gelangen kann ohne Schäden an der Hohlkörpereinheit in Kauf nehmen zu müssen. Bevorzugt ist dafür eine korrosionsmindernde Beschichtung oder Oberflächenbehandlung an den Innenflächen der Hohlkörpereinheit vorgesehen. In einer weiteren bevorzugten Ausführungsform weist die Hohlköpereinheit eine Vielzahl von Aussparungen auf, die nicht miteinander in Verbindung stehen, wobei der Druckraum in einer dieser Aussparungen vorgesehen ist.

In einer weiteren bevorzugten Ausführungsform ist der Druckraum als eine Druckleitung ausgebildet, wobei die Druckleitung in der Aussparung der Hohlkörpereinheit angeordnet ist und wobei der Druckraum an einem ersten Ende von einem Zufuhrstutzen und an einem zweiten Ende von der Statoreinheit begrenzt wird. Bevorzugt ist eine Druckleitung vorgesehen, welche sich innerhalb der Aussparung in der Hohlkörpereinheit befindet, und vom Zufuhrstutzen bis hin zur Statoreinheit reicht. Es kann weiterhin auch bevorzugt sein, dass die Druckleitung von außen durch eine Öffnung bzw. Aussparung in der Hohlkörpereinheit in den Hohlraum in der Hohlkörpereinheit geführt wird und innerhalb der Hohlkörpereinheit bis hin zur Statoreinheit reicht. Vorteilhaft bei dieser Ausführungsform ist, dass der Aufwand der Abdichtung der Hohlkörpereinheit wesentlich geringer ist als dies der Fall wäre, wenn die gesamte Aussparung in der Hohlkörpereinheit als Druckraum fungieren würde und entsprechend des Endabschnitts der Hohlkörpereinheit gegen Durchströmen von Luft abgedichtet werden müsste. Befindet sich der Druckraum in der Druckleitung, so muss bevorzugt nur die Kontaktfläche zwischen Statoreinheit und Druckleitung bzw. die Kontaktfläche zwischen Druckleitung und Zufuhrstutzen abgedichtet werden. Es kann aber weiterhin bevorzugt sein, dass auch bei Verwendung einer Druckleitung innerhalb der Hohlkörpereinheit die Kontaktflächen am Endabschnitt bzw. am Zufuhrstutzen gegen das Durchtreten von Fluid, also Luft oder Feuchtigkeit, abgedichtet werden, um auf diese Weise Korrosion im Inneren der Hohlkörpereinheit zu vermindern. Die Druckleitung ist bevorzugt ein flexibler Druckschlauch, beispielsweise ein mit Metall- oder Kunststofffasern verstärkter, verkleideter oder armierter Gummischlauch oder ein aus Metall oder Kunststoff geflochtener und mit einer luftdichten Gummibeschichtung innen versehener Schlauch. Weiterhin bevorzugt kann die Druckleitung auch ein Metallrohr oder eine Druckleitung aus Polyamid ohne Einlagen sein. Durch die bevorzugte Verlegung der Druckleitung innerhalb der Hohlkörpereinheit ist die Druckleitung deutlich besser gegen Beschädigung durch aufgewirbelte Fremdkörper im Bereich des Unterbodens des Nutzfahrzeuges geschützt, als wenn sie frei verlegt wäre. Es lässt sich folglich durch Verlegen der Druckleitung in die Hohlkörpereinheit die Sicherheit des Systems zur Druckluftzufuhr deutlich steigern.

In einer besonders bevorzugten Ausführungsform ist an der Kontaktfläche zwischen Endabschnitt und Fixiereinheit ein Endabschnittdichtelement vorgesehen. Mittels dieses Dichtelementes zwischen dem Endabschnitt der Hohlkörpereinheit und der Fixiereinheit wird verhindert, dass Druckluft durch zwischen dem Endabschnitt und der Fixiereinheit entstehende Spalte entweicht. Diese Abdichtung ist bevorzugt dann erforderlich, wenn die Hohlkörpereinheit bzw. die Aussparung in der Hohlkörpereinheit als Druckraum verwendet wird. Es muss in diesem Fall zum Einen gewährleistet sein, dass die Druckluft nicht unkontrolliert über die Kontaktfläche zwischen Endabschnitt und Fixiereinheit entweicht, und weiterhin, dass eventuell angrenzende Baugruppen, wie zum Beispiel die Lageranordnung, nicht mit Druckluft beaufschlagt werden und eventuell Schäden in diesen Baugruppen hervorgerufen werden. Da die Fixiereinheit bevorzugt festgelegt und nicht drehbar zur Hohlkörpereinheit, bzw. deren Endabschnitt, gelagert ist, kann die Dichtung eine statische Dichtung sein. Bevorzugt kann auf eine Dichtung mittels eines O-Ringes oder einer Profildichtung aus vulkanisiertem Gummi oder silikonartigen oder kautschukhaltigen Materialien zurückgegriffen werden.

Von Vorteil ist es, wenn die Fixiereinheit einen ersten Befestigungsbereich und einen zweiten Befestigungsbereich aufweist, wobei der erste Befestigungsbereich am Endabschnitt festlegbar ist und die Fixiereinheit gegen Verlagerung relativ zur Hohlkörpereinheit sichert und wobei der zweite Befestigungsbereich die Statoreinheit konzentrisch zur Axialrichtung festlegt, und gegen Verlagerung relativ zur Hohlkörpereinheit sichert. Der erste Befestigungsbereich ist bevorzugt der Befestigungsbereich, welcher mittels eines Gewindes oder eines ähnlichen Befestigungsmittels am Endabschnitt der Hohlkörpereinheit festgelegt ist. Bevorzugt weist der erste Befestigungsbereich eine Erstreckung im Wesentlichen längs der Axialrichtung auf und ist beispielsweise als eine Art Hülse ausgebildet. Die Außenfläche des ersten Befestigungsbereiches ist bevorzugt als ein Sechskant ausgeführt, sodass mittels geeigneter Werkzeuge ein Drehmoment auf die Fixiereinheit bzw. auf den ersten Befestigungsbereich der Fixiereinheit übertragen werden kann, um diesen zu drehen und mit dieser Drehung das Fixierelement an dem Endabschnitt festzulegen. Von Vorteil ist es, wenn der erste Befestigungsbereich eine Kontaktfläche mit der Lageranordnung besitzt und eine Kraft über diese Kontaktfläche auf die Lageranordnung überträgt, um die Lageranordnung an der Hohlkörpereinheit zu verspannen. Es ist bevorzugt aber auch denkbar, noch verschiedene Zwischen- oder Distanzstücke bzw. Unterlegscheiben zu verwenden, welche vom ersten Befestigungsbereich der Fixiereinheit in Richtung der Lageranordnung gepresst werden und diese wiederum gegen die Hohlkörpereinheit verspannen. Der zweite Befestigungsbereich erstreckt sich im Wesentlichen in radialer Richtung. Bevorzugt ähnelt der zweite Befestigungsbereich einer Scheibe oder Platte, wobei der zweite Befestigungsbereich an seiner Außenkante mit dem ersten Befestigungsbereich verbunden ist bzw. an diesen angelagert ist. Darüber hinaus weist der zweite Befestigungsbereich geeignete Mittel auf, die Statoreinheit aufzunehmen, wobei besonders bevorzugt eine Aussparung in den zweiten Befestigungsbereich eingebracht ist, in welche die Statoreinheit eingreift. Besonders bevorzugt ist in der Aussparung des zweiten Befestigungsbereiches ein Gewinde vorgesehen, in welches die Statoreinheit mittels eines an ihr vorgesehenen, geeigneten Außengewindes eingeschraubt werden kann. In einer bevorzugten Ausführungsform ist der zweite Befestigungsbereich als Scheibe ausgeführt, welche vom ersten Befestigungsbereich gegen die Hohlkörpereinheit gepresst wird, wobei an der Kontaktfläche zwischen dem zweiten Befestigungsbereich und der Hohlkörpereinheit eine Dichtung vorgesehen sein kann, die das Entweichen von Druckluft aus dem Druckraum verhindert. Die konzentrische Ausrichtung der Statoreinheit relativ zur Axialrichtung ist besonders aus dem Grunde wichtig, dass die Statoreinheit mit einer rotierenden Komponente der Rotoreinheit verbunden wird, wobei die Axialrichtung die Rotationsachse ist. Exzentrische Lagerung der Statoreinheit würde eine translatorische Bewegung der Rotoreinheit und daraus resultierende Beschädigungen zur Folge haben.

Bevorzugt ragt der zweite Befestigungsbereich in die Aussparung der Hohlkörpereinheit hinein. In dieser bevorzugten Ausführungsform weist der zweite Befestigungsbereich einen inneren Abschnitt auf, welcher sich im Wesentlichen in axialer Richtung erstreckt und so in die Aussparung an der Hohlkörpereinheit hineinragt. Dies kann besonders dann bevorzugt sein, wenn der Bauraum am Ende der Hohlkörpereinheit begrenzt ist und nach außen ragende bzw. von der Hohlkörpereinheit herausragende Teile vermieden werden müssen.

Erfindungsgemäß ist die Fixiereinheit einstückig ausgeführt. Die Fixiereinheit bestehend aus dem ersten und zweiten Befestigungsbereich ist als ein einstückiges Bauteil ausgeführt. Dieses kann zum Beispiel durch Gießen oder Schmieden hergestellt werden, wobei bevorzugt nach dem Bearbeiten eine kathodische Tauchlackierung (KTL) vorgenommen wird und das Rohteil danach oberflächenbearbeitet wird. Es kann weiterhin auch bevorzugt sein, die Fixiereinheit und die Statoreinheit einstückig auszuführen. Es kann auf diese Weise der Dichtungsaufwand bei der Anbringung der einzelnen Teile aneinander reduziert werden.

Ferner bevorzugt ist, dass das Statorelement einstückig mit dem zweiten Befestigungsbereich der Fixiereinheit ausgeführt ist. Bevorzugt kann bei dieser Ausführungsform als erster Befestigungsbereich der Fixiereinheit eine herkömmliche Mutter bzw. Radmutter verwendet werden, welche eine als einstückig ausgeführte Einheit aus zweitem Befestigungsbereich und Statoreinheit gegen die Hohlkörpereinheit presst. Dies reduziert den Konstruktions- und Herstellungsaufwand und senkt somit die Kosten.

Vorteilhaft ist an der Fixiereinheit eine Entlüftungsaussparung vorgesehen. Diese Entlüftungsaussparung kann besonders bei zu hohem Druck das System bzw. den Druckraum entlasten. Bevorzugt ist die Entlüftungsaussparung so angebracht, dass Druckluft, welche an der Dichtung zwischen Endbereich und Fixiereinheit vorbeigelangen konnte, nicht in den Lagerbereich gelangt, sondern über die Entlüftungsaussparung in die Umwelt abgegeben wird. Die Entlüftungsaussparung stellt somit ein Sicherheitselement dar, welches gewährleistet, dass der sichere Betrieb der Radlageranordnung nicht durch entweichende Druckluft, die in den Lagerbereich gelangt, beeinflusst wird.

Weitere Vorteile und Merkmale ergeben sich aus der nachfolgenden, beispielhaften Beschreibung bevorzugter Ausführungsformen der erfindungsgemäßen Radlageranordnung mit Bezug auf die beigefügten Figuren. Unterschiedliche Merkmale verschiedener Ausführungsbeispiele können im Rahmen der Erfindung miteinander kombiniert werden. Es zeigen:
- Fig. 1: eine Schnittansicht einer ersten bevorzugten Ausführungsform der erfindungsgemäßen Radlageranordnung,
- Fig. 2: eine weitere Schnittansicht einer bevorzugten Ausführungsform der erfindungsgemäßen Radlageranordnung,
- Fig. 3: ein Beispiel, das nicht zur Erfindung gehört, mit einer zweiteilig ausgelegten Fixiereinheit und einer Hohlkörpereinheit und
- Fig. 4: eine Schnittansicht einer weiteren bevorzugten Ausführungsform der Fixiereinheit und der Hohlkörpereinheit.

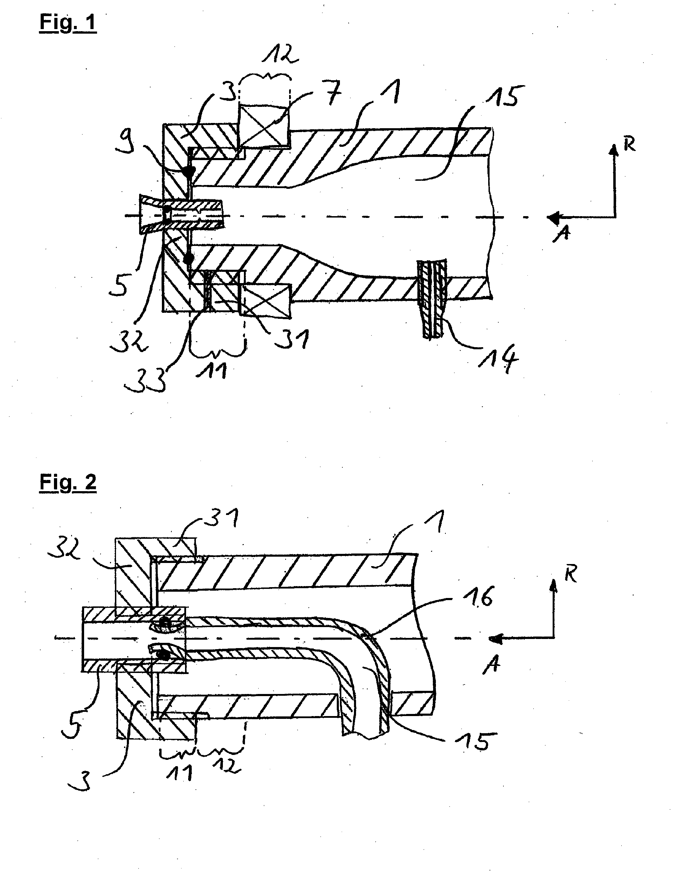

In Fig. 1 ist eine bevorzugte Ausführungsform der erfindungsgemäßen Radlageranordnung gezeigt, wobei die Radlageranordnung eine Hohlkörpereinheit 1, eine Fixiereinheit 3, ein Statorelement 5, eine Lageranordnung 7 und einen Zufuhrstutzen 14 aufweist. Im Inneren der Hohlkörpereinheit 1 ist eine Aussparung vorgesehen, wobei (in der Figur nicht gezeigt) die Aussparung in der Figur nach rechts hin begrenzt sein kann. Bei der in der Fig. 1 gezeigten Ausführungsform dient die Aussparung der Hohlkörpereinheit 1 gleichzeitig als Druckraum 15. Dieser ist begrenzt durch die Innenwand der Hohlkörpereinheit 1, den Zufuhrstutzen 14, die Fixiereinheit 3 und die Statoreinheit 5. Es ist bevorzugt, dass die Hohlkörpereinheit 1 ein achsensymmetrisches Bauteil ist, welches die in der Figur gezeigten, nach links weisenden Merkmale in gespiegelter Anordnung nach rechts hin aufweist. Bevorzugt kann also an jedem Ende der Hohlkörpereinheit 1 eine Fixiereinheit 3 und eine Statoreinheit 5 angeordnet werden, wobei beide durch eine Aussparung im Inneren der Hohlköpereinheit 1 miteinander verbunden sind. Der Zufuhrstutzen 14 dient in dieser bevorzugten Ausführungsform dazu, Druckluft in den Druckraum 15, also die Aussparung innerhalb der Hohlkörpereinheit 1 zu leiten, wobei diese Druckluft die an beiden Seiten der Hohlkörpereinheit 1 vorgesehenen Stator- bzw. Rotoreinheiten 5 erreicht. Die Hohlkörpereinheit 1 weist an ihrem, in der Figur linken Ende einen Endbereich 11 auf, wobei in diesem Endbereich 11 die Fixiereinheit 3 an der Hohlkörpereinheit 1 festgelegt ist. Dies wird in der bevorzugten Ausführungsform mittels eines Gewindes umgesetzt. Es ist an der Außenseite der Hohlkörpereinheit 1 ein Außengewinde und an der Innenseite der Fixiereinheit 3 ein Innengewinde vorgesehen, welche ineinander greifen, und dazu dienen, eine Kraft in Axialrichtung A aufzubringen. Mit dieser Kraft in Axialrichtung A legt die Fixiereinheit 3 die Lageranordnung 7 an der Hohlkörpereinheit 1 fest. Die Fixiereinheit 3 weist zwei Bereiche auf: Den ersten Befestigungsbereich 31, der dazu dient, die Fixiereinheit 3 an der Hohlkörpereinheit 1 festzulegen und den zweiten Befestigungsbereich 32, der dazu dient, die Statoreinheit 5 koaxial zur Axialachse A zu fixieren. Bei der in der Figur gezeigten Ausführungsform sind der erste und der zweite Befestigungsbereich 31, 32 einstückig ausgeführt. Im zweiten Befestigungsbereich 32 der Fixiereinheit 3 ist eine Aussparung vorgesehen, in welche die Statoreinheit 5 eingesetzt werden kann. Diese Aussparung weist bevorzugt ein Gewinde auf, sodass die Statoreinheit 5 mittels eines korrespondierenden Gewindes in dem zweiten Befestigungsbereich 32 der Fixiereinheit 3 eingeschraubt werden kann. Die Statoreinheit 5 ihrerseits weist an ihrer Innenseite geeignete Dichtungen und Vorsprünge auf, die es ermöglichen, eine - in der Figur nicht gezeigte - Rotoreinheit an der Statoreinheit 5 anzulagern und luftdicht mit dieser zu verbinden. Über die Rotoreinheit kann die Druckluft aus dem Druckraum 15 in die Statoreinheit 5 und über die Rotoreinheit hinweg bis hin zu weiteren rotierenden Teilen der Radlageranordnung gelangen. Damit die im Druckraum 15 befindliche Luft nicht anders als über die Stator- und die Rotoreinheit 5 entweichen kann, ist eine Dichtung 9 vorgesehen, welche sich zwischen Hohlkörpereinheit 1 und Fixiereinheit 3 befindet. Diese Dichtung ist bevorzugt ein O-Ring aus Gummi oder ähnlich elastisch verformbarem Material. Weiterhin ist an der Fixiereinheit 3 eine Entlüftungsaussparung 33 vorgesehen, welche dazu dient, dass im Fall des Versagens der Dichtung 9, die Druckluft nicht in den Lagerbereich 11 bzw. hin zur Lageranordnung 7 gelangen kann, sondern vorher über die Entlüftungsaussparung 33 in die Umwelt abgegeben wird. Bevorzugt kann auch an der Entlüftungsaussparung 33 ein Sensorelement vorgesehen sein, welches registriert, ob Druckluft bis hin zur Entlüftungsaussparung 33 gelangt, was ein Indiz dafür wäre, dass die Dichtung 9 nicht mehr funktionstüchtig ist. Der Zufuhrstutzen 14 wird bevorzugt mit einem Gewinde in die Hohlkörpereinheit 1 eingeschraubt. Zu diesem Zweck ist an der Hohlkörpereinheit 1 eine Aussparung mit einem Innengewinde vorgesehen, in welches ein an den Zufuhrstutzen 14 angebrachtes Außengewinde eingreifen kann und auf diese Weise den Zufuhrstutzen an der Hohlkörpereinheit festlegt. Weiterhin weist der Zufuhrstutzen 14 geeignete Geometrien auf, die bevorzugt dazu dienen, eine Druckleitung am Zufuhrstutzen 14 festzulegen und über diese Druckleitung Druckluft in den Zufuhrstutzen 14 zu leiten, welcher wiederum die Druckluft in den Druckraum 15 hineinleitet.

Fig. 2 zeigt eine bevorzugte Ausführungsform der Radlageranordnung mit einer Druckleitung 16. Bei dieser bevorzugten Ausführungsform ist der Druckraum 15 nicht gleich der Aussparung der Hohlkörpereinheit 1, sondern befindet sich im Inneren einer Druckleitung 16. Die Druckleitung 16 ist bevorzugt ein flexibler Druck-Schlauch oder eine starre Metallleitung, die mit einem Ende an der Statoreinheit 5 angreift und mit einem zweiten Ende durch die Wand der Hohlkörpereinheit 1 hindurchragt und zu einer Pumpeinheit hinreicht und an dieser festgelegt ist. Die Druckleitung 16 muss mit geeigneten Dichtungselementen gegenüber der Statoreinheit 5 abgedichtet werden, beispielsweise wie in der Figur angedeutet, durch O-Ringe an der Kontaktfläche zwischen Druckleitung 16 und Statoreinheit 5. Anstelle der in der Figur gezeigten Druckleitung 16, die durch eine Aussparung in der Wand der Hohlkörpereinheit 1 hindurchreicht, kann die Druckleitung auch an einem Zufuhrstutzen 14, wie in Figur 1 gezeigt, anschließen, wobei an dem Zufuhrstutzen 14 von außen eine weitere Druckleitung 16 angelegt werden kann. Der Vorteil der in der Figur 2 gezeigten Ausführungsform ist, dass die Aussparung in der Hohlkörpereinheit 1 nicht mit Druck beaufschlagt ist und folglich nicht auf aufwendige Art und Weise gegen Entweichen von Druckluft, zum Beispiel an der Kontaktfläche zwischen Hohlkörpereinheit 1 und Fixiereinheit 3, gesichert werden muss.

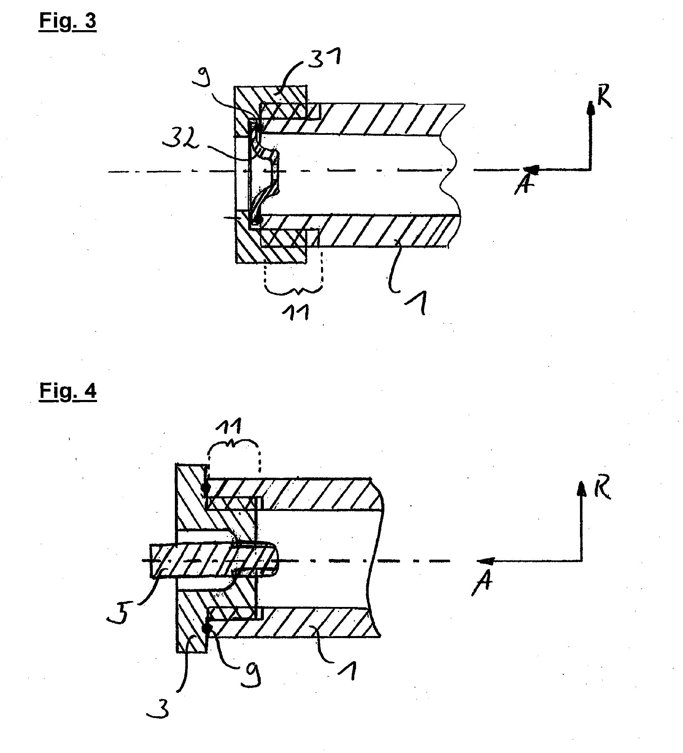

Fig. 3 zeigt ein Beispiel (das nicht zur Erfindung gehört) für die Fixiereinheit 3, welche an die Hohlkörpereinheit 1 angelagert ist. Dabei ist die Fixiereinheit 3 zweiteilig ausgelegt, wobei der erste Befestigungsbereich 31 an der Hohlkörpereinheit 1 festgelegt ist und gleichzeitig den zweiten Befestigungsbereich 32 gegen eine Kontaktfläche mit der Hohlkörpereinheit 1 presst. Der zweite Befestigungsbereich 32 ist dabei bevorzugt als scheibenförmige oder kegelförmige flache Metallscheibe ausgelegt, die konzentrisch zur Axialachse A eine Aussparung aufweist. In dieser Aussparung kann die Statoreinheit 5 angeordnet und an dieser festgelegt werden. Der zweite Befestigungsbereich 32 wird vom ersten Befestigungsbereich 31, der eine geeignete Geometrie in Form zum Beispiel eines Vorsprungs bzw. eines Flansches aufweist, gegen die Hohlkörpereinheit 1 gepresst. An der Kontaktstelle zwischen dem zweiten Befestigungsbereich 32 und der Hohlkörpereinheit 1 ist ein Dichtelement 9 vorgesehen, welches durch die Anpresskraft, die vom ersten Befestigungsbereich 31 auf den zweiten Befestigungsbereich 32 übertragen wird, dicht schließt. Es kann weiterhin auch bevorzugt sein, den zweiten Befestigungsbereich 32 und die Statoreinheit 5 einstückig auszuführen, wobei diese Baueinheit dann wiederum auf einfache Weise mittels einer Mutter, die einen Flansch aufweist, gemäß der in Fig. 3 gezeigten Ausführungsform gegen die Hohlkörpereinheit 1 gepresst wird.

Figur 4 zeigt eine weitere bevorzugte Ausführungsform der Fixiereinheit 3, wobei die Fixiereinheit 3 einstückig ausgeführt ist. Weiterhin weist die Fixiereinheit 3 ein Außengewinde auf, welches bevorzugt in ein dafür vorgesehenes Innengewinde an der Hohlkörpereinheit 1 eingeschraubt wird. In eine Aussparung an der Fixiereinheit 3, welche konzentrisch zur Axialrichtung A ausgerichtet ist, kann die Statoreinheit 5 eingeschraubt werden. Bevorzugt ist an der Kontaktfläche zwischen Hohlkörpereinheit 1 und Fixiereinheit 3 ein Dichtelement 9 vorgesehen.

### Bezugszeichenliste:

- 1: - Hohlkörpereinheit
- 3: - Fixiereinheit
- 5: - Statoreinheit
- 7: - Lagerringelement
- 9: - Endabschnittdichtelement
- 11: - Endabschnitt
- 12: - Lagerbereich
- 14: - Zufuhrstutzen
- 15: - Druckraum
- 16: - Druckleitung
- 31: - erster Befestigungsbereich (axial)
- 32: - zweiter Befestigungsbereich (radial)
- 33: - Entlüftungsaussparung
- A: - Axialrichtung
- R: - Radialrichtung

## Patentansprüche

1. Radlageranordnung, insbesondere Radlageranordnung für Nutzfahrzeuge, umfassend eine Hohlkörpereinheit (1), eine Fixiereinheit (3) und eine Statoreinheit (5),
wobei die Hohlkörpereinheit (1) eine maximale Erstreckung längs einer Axialrichtung (A), einen sich im Wesentlichen längs der Axialrichtung (A) erstreckenden Druckraum (15) und einen Endabschnitt (11) aufweist,
wobei die Fixiereinheit (3) am Endabschnitt (11) festgelegt ist,
wobei an der Fixiereinheit (3) die Statoreinheit (5) festgelegt ist,
wobei die Statoreinheit (5) Befestigungs- und Abdichtungsmittel aufweist, mittels derer eine Rotoreinheit luftdicht und drehbar relativ zur Statoreinheit (5) an die Radlageranordnung anlagerbar ist,
wobei die Hohlkörpereinheit (1) benachbart zum Endabschnitt (11) einen Lagerbereich (12) aufweist, und
wobei im Lagerbereich (12) eine Lageranordnung (7) an der Hohlkörpereinheit (1) gelagert ist,
**dadurch gekennzeichnet**,
dass-die Lageranordnung (7) von der Fixiereinheit (3) gegen Verlagerung relativ zur Hohlkörpereinheit (1) verspannt, bzw. verspannbar ist, und dass die Fixiereinheit (3) einstückig ausgeführt ist.

2. Radlageranordnung nach Anspruch 1,
wobei der Druckraum (15) eine Aussparung in der Hohlkörpereinheit (1) ist, und
wobei der Druckraum (15) an einem ersten Ende von einem Zufuhrstutzen (14) und an einem zweiten Ende von der Fixiereinheit (3) und der Statoreinheit (5) begrenzt wird.

3. Radlageranordnung nach Anspruch 1,
wobei der Druckraum (15) als eine Druckleitung (16) ausgebildet ist,
wobei die Druckleitung (16) in der Aussparung der Hohlkörpereinheit (1) angeordnet ist, und
wobei der Druckraum (15) an einem ersten Ende von einem Zufuhrstutzen (14) und an einem zweiten Ende von der Statoreinheit (5) begrenzt wird.

4. Radlageranordnung nach einem der vorhergehenden Ansprüche,
wobei an der Kontaktfläche zwischen Endabschnitt (11) und Fixiereinheit (3) ein Endabschnittdichtelement (9) vorgesehen ist.

5. Radlageranordnung nach einem der vorhergehenden Ansprüche,
wobei die Fixiereinheit (3) einen ersten Befestigungsbereich (31) und einen zweiten Befestigungsbereich (32) aufweist,
wobei der erste Befestigungsbereich (31) am Endabschnitt (11) festlegbar ist und die Fixiereinheit (3) gegen Verlagerung relativ zur Hohlkörpereinheit (1) sichert, und
wobei der zweite Befestigungsbereich (32) die Statoreinheit (5) konzentrisch zur Axialrichtung (A) festlegt und gegen Verlagerung relativ zur Hohlkörpereinheit (1) sichert.

6. Radlageranordnung nach Anspruch 5,
wobei der zweite Befestigungsbereich (32) in die Aussparung der Hohlkörpereinheit (1) hineinragt.

7. Radlageranordnung nach einem der vorhergehenden Ansprüche,
wobei das Statorelement (5) einstückig mit dem zweiten Befestigungsbereich (32) der Fixiereinheit (3) ausgeführt ist.

8. Radlageranordnung nach einem der vorhergehenden Ansprüche,
wobei an der Fixiereinheit (3) eine Entlüftungsaussparung (33) vorgesehen ist.

## Claims

1. A wheel bearing arrangement, in particular a wheel bearing arrangement for utility vehicles or commercial vehicles,
comprising a hollow body unit (1), a securing unit (3) and a stator unit (5), wherein the hollow body unit (1) has a maximum extent along or in an axial direction (A), a pressure space (15) extending substantially along or in the axial direction (A) and an end section (11),
wherein the securing unit (3) is secured to the end section (11),
wherein the stator unit (5) is secured to the securing unit (3),
wherein the stator unit (5) has attachment and sealing means, by means of which a rotor unit can be made to bear against or be attached to the wheel bearing arrangement in a way which is air-tight and rotatable relative to the stator unit (5),
wherein the hollow body unit (1) adjacent to the end section (11) comprises a bearing portion (12), and
wherein in the bearing portion (12) there is supported a bearing arrangement (7) on the hollow body unit (1)
**characterized in that** the bearing arrangement (7) is tensioned or being able of being tensioned by the securing unit (3) against displacement relative to the hollow body unit (1), and
that the securing unit (3) is designed single-piece.

2. The wheel bearing arrangement of claim 1,
wherein the pressure space (15) is a recess or cavity in the hollow body unit (1), and
wherein the pressure space (15) is limited at a first end by a supply nozzle (14) and at a second end by the securing unit (3) and the stator unit (5).

3. The wheel bearing arrangement of claim 1,
wherein the pressure space (15) is designed as a pressure line (16), wherein the pressure line (16) is arranged in the recess of the hollow body unit (1), and
wherein the pressure space (15) is limited at a first end by a supply nozzle (14) and at a second end by the stator unit (5).

4. The wheel bearing arrangement of any one of the preceding claims,
wherein at the contact surface between the end section (11) and the securing unit (3) there is provided an end section sealing element (9).

5. The wheel bearing arrangement of any one of the preceding claims,
wherein the securing unit (3) comprises a first attachment portion (31) and a second attachment portion (32),
wherein the first attachment portion (31) can be secured to the end section (11) and secures the securing unit (3) against displacement relative to the hollow body unit (1), and
wherein the second attachment portion (32) secures the stator unit (5) concentrically to the axial direction (A) and secures it against displacement relative to the hollow body unit (1).

6. The wheel bearing arrangement of claim 5,
wherein the second attachment portion (32) projects into the recess of the hollow body unit (1).

7. The wheel bearing arrangement of any one of the preceding claims,
wherein the stator element (5) is designed single-piece with the second attachment portion (32) of the securing unit (3).

8. The wheel bearing arrangement of any one of the preceding claims,
wherein on the securing unit (3) there is provided a ventilation recess (33).

## Revendications

1. Agencement formant palier de roue, en particulier pour véhicules utilitaires, comprenant une unité à corps creux (1), une unité de fixation (3) et une unité formant stator (5),
dans lequel l'unité à corps creux (1) présente une extension maximum le long d'une direction axiale (A) et possède une chambre à pression (15) s'étendant sensiblement le long de la direction axiale (A), et un tronçon terminal (11),
dans lequel l'unité de fixation (3) est immobilisée sur le tronçon terminal (11),
dans lequel l'unité formant stator (5) est immobilisée sur l'unité de fixation (3),
dans lequel l'unité formant stator (5) comporte des moyens de fixation et d'étanchement au moyen desquels une unité formant rotor est susceptible d'être rapportée sur l'agencement formant palier de roue de manière étanche à l'air et avec possibilité de rotation par rapport à l'unité formant stator (5),
dans lequel l'unité à corps creux (1) comporte une zone de palier (12) au voisinage du tronçon terminal (11), et
dans lequel un agencement de palier (7) est monté sur l'unité à corps creux (1) dans la zone de palier (12),
**caractérisé en ce que**
l'agencement de palier (7) est contraint ou susceptible d'être contraint par l'unité de fixation (3) à l'encontre d'un déplacement par rapport à l'unité à corps creux (1), et
**en ce que** l'unité de fixation (3) est réalisée d'une seule pièce.

2. Agencement formant palier de roue selon la revendication 1,
dans lequel la chambre à pression (15) est un évidement dans l'unité à corps creux (1), et
dans lequel la chambre à pression (15) est délimitée à une première extrémité par une pipe d'admission (14) et à une seconde extrémité par l'unité de fixation (3) et par l'unité formant stator (5).

3. Agencement formant palier de roue selon la revendication 1,
dans lequel la chambre à pression (15) est réalisée sous forme de conduite sous pression (16),
dans lequel la conduite sous pression (16) est agencée dans l'évidement de l'unité à corps creux (1), et
dans lequel la chambre à pression (15) est délimitée à une première extrémité par une pipe d'admission (14) et à une seconde extrémité par l'unité formant stator (5).

4. Agencement formant palier de roue selon l'une des revendications précédentes,
dans lequel un élément d'étanchement (9) pour tronçon terminal est prévu au niveau de la surface de contact entre le tronçon terminal (11) et l'unité de fixation (3).

5. Agencement formant palier de roue selon l'une des revendications précédentes,
dans lequel l'unité de fixation (3) comprend une première zone de fixation (31) et une seconde zone de fixation (32),
dans lequel la première zone de fixation (31) est susceptible d'être immobilisée sur le tronçon terminal (11) et bloque l'unité de fixation (3) à l'encontre d'un déplacement par rapport à l'unité à corps creux (1), et
dans lequel la seconde zone de fixation (32) immobilise l'unité formant stator (5) de manière concentrique à la direction axiale (A) et la bloque à l'encontre d'un déplacement par rapport à l'unité à corps creux (1).

6. Agencement formant palier de roue selon la revendication 5,
dans lequel la seconde zone de fixation (32) pénètre dans l'évidement de l'unité à corps creux (1).

7. Agencement formant palier de roue selon l'une des revendications précédentes,
dans lequel l'élément formant stator (5) est réalisé d'une seule pièce avec la seconde zone de fixation (32) de l'unité de fixation (3).

8. Agencement formant palier de roue selon l'une des revendications précédentes,
dans lequel un évidement de mise à l'air (33) est prévu sur l'unité de fixation (3).
